(19) Europäisches Patentamt
European Patent Office
Office européen des brevets

(11) **EP 2 174 847 A1**

(12) **EUROPÄISCHE PATENTANMELDUNG**

(43) Veröffentlichungstag:
**14.04.2010 Patentblatt 2010/15**

(51) Int Cl.:
**B60T 8/1755** *(2006.01)* **B60T 8/17** *(2006.01)*
**B60T 8/172** *(2006.01)*

(21) Anmeldenummer: **09012198.9**

(22) Anmeldetag: **25.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **26.09.2008 DE 102008049174**

(71) Anmelder: **Staude & Company**
**42111 Wuppertal (DE)**

(72) Erfinder: **Staude, Rudolf, Dr.-Ing.**
**42111 Wuppertal (DE)**

(54) **Verfahren zur Ansteuerung des elektronischen Stabilitätsprogramms (ESP) von Fahrzeuganhängern**

(57) Verfahren zur Ansteuerung des elektronischen Stabilitätsprogramms (ESP) von Fahrzeuganhängern, wobei der Knickwinkel über mindestens einen Knickwinkelsensor gemessen wird und die Last im Anhänger über mindestens zwei Lastmessern. Eine Fahrzeugzustandserkennungseinheit berechnet aus den gemessenen Werten auswertbare Werte, die einer entsprechenden Auswerteinheit zugeführt werden. Diese generiert aus den auswertbaren Werten, die Querbeschleunigung und die Gierrate des Fahrzeugs. Diese werden den Aktoren für das ESP-System zugeführt, um das Fahrzeug fahrdynamisch zu stabilisieren. Weiterhin werden die gemessenen und/oder berechneten Werte einer Anzeigeeinheit zugeführt, die die gemessenen und/oder berechneten Werte darstellt und ggf. Signalmeldungen ausgibt.

Ansteuerung von ABS, ASR und ESP

FIG.2

EP 2 174 847 A1

**Beschreibung**

Die Erfindung richtet sich auf ein Verfahren zur Ansteuerung eines elektronischen Stabilitätsprogramms (ESP) von Fahrzeuganhängern. Solche Systeme beinhalten herkömmlich die bekannten Antiblockiersysteme (ABS) und die Antischlupfregelung (ASR). Darüber hinaus benötigt das ESP-System Signale zur Stabilisierung der während der Fahrt auftretenden Querbeschleunigungen von Anhängern. Zu diesem Zweck wird ein Gierratensensor zur Messung der Drehbewegung des Anhängers und ein Sensor zur Ermittlung der Querbeschleunigung des Anhängers eingesetzt. Diese gemessenen Werte werden dann dem ESP-System zugeführt und dieses kann auf die auftretenden Kräfte während des Fahrens reagieren.

Um das fahrdynamische Verhalten der Fahrzeuge vollständig erfassen zu können, sind diese Sensoren möglichst im Schwerpunkt des Anhängers anzuordnen.

ESP-Systeme werden nicht nur für PKW's, sondern auch für Nutzfahrzeuge und Nutzfahrzeuganhänger eingesetzt. Dabei ist vom Grundsatz unberücksichtigt geblieben, dass Nutzfahrzeuge auf Fahrzeugteilen, nämlich aus der Zugmaschine und dem Anhänger bestehen können, die miteinander gelenkig verbunden sind. Ferner haben die unterschiedlichen Beladezustände von Zugmaschine und Anhänger einen großen Einfluss auf das dynamische Verhalten der Nutzfahrzeuge. Auch diese Tatsache blieb bei der Einführung der ESP-Systeme für Nutzfahrzeuge unberücksichtigt. Das bedeutet, dass bei unterschiedlichen Beladezuständen sich die Lage des Schwerpunkts des Anhängers erheblich ändern kann. Unterschiedliche Beladezustände beeinflussen das dynamische Fahrverhalten des Anhängers in erheblichem Maße.

Die DE 10 2006 052 698 A 1 beschreibt in diesem Zusammenhang ein Verfahren und Vorrichtung zum Stabilisieren eines Kraftfahrzeugs. Diese Druckschrift versucht den oben genannten Nachteilen entgegenzuwirken, indem das Wankverwalten des Fahrzeugs bzw. des Anhängers ermittelt wird, wonach aktive Wankstabilisatoren dem Wankverhalten entgegentreten sollen. Nachteilig bei dieser Art der Fahrzeugstabilisierung ist jedoch, dass aktive Wankstabilisatoren in das Fahrzeug integriert werden müssen und nicht über vorhandene standardisierte Sicherheitssysteme, wie ABS, ASR und ESP geregelt werden. Dies ist kompliziert und verteuert die Vorrichtung und das dazugehörige Verfahren.

Die WO 03/0005538 beschreibt ein Regelsystem für angetriebene Sattelauflieger zum Betrieb in Minen und im Offroadbereich. Mit Hilfe von Kraftmessdosen werden Horizontalkräfte bestimmt, die zwischen der Zugmaschine und den angetriebenen Rädern des ersten Sattelaufliegers bei Fahrt im unebenen Gelände auftreten. Mithilfe der Druckmessdosen wird festgestellt, ob die Kräfte zwischen der Zugmaschine und dem ersten Sattelauflieger positiv oder negativ sind. Dadurch wird festgestellt, ob der angetriebene Sattelauflieger die Zugmaschine schiebt oder ob der Sattelauflieger von der Zugmaschine gezogen wird. In dieser Druckschrift sind keine Sensoren zur Messung von vertikalen Beladungskräften vorhanden und somit kann die Lage des Schwerpunktes in Abhängigkeit der Ladung des Fahrzeuges in Längsrichtung nicht bestimmt werden.

DE 199 18 597 zeigt ein Verfahren zur Reduktion der Kippgefahr von Kraftfahrzeugen und ermittelt einen Kipp-Koeffizienten aufgrund der Reifenaufstandskräfte. Auch diese Druckschrift bezieht nur das seitliche Kippverhalten des Anhängers in die Berechnung mit ein. Der Beladungszustand wird hierbei vernachlässigt.

Der vorliegenden Erfindung liegt deshalb die Aufgabe zugrunde, ein Verfahren für Fahrzeuge zu schaffen, bei dem die momentanen Fahrzeugzustände inklusive des Knickwinkels zwischen Zugfahrzeug und Anhänger sowie die Lage des Schwerpunkts im Anhänger aufgrund der momentanen Beladung erfasst werden. Weiterhin soll das Verfahren nahezu verzögerungsfrei die bisherigen Systeme, die in Fahrzeugen bekannt sind, wie ABS, ASR und ESP ansteuern.

Dies wird erfindungsgemäß durch die im Anspruch 1 angegebenen Merkmale erreicht, denen folgende besondere Bedeutung zukommt.

Eine zwingende Voraussetzung für die genaue Bestimmung der Gierrate und der Querbeschleunigung im Schwerpunkt des Anhängers kann mit fest installierten Gierratensensoren und Querbeschleunigungssensoren bei unterschiedlichen Beladezuständen nicht erfüllt werden. Vielmehr können bei unterschiedlichen Beladungszuständen die von den Gierratensensoren und von Querbeschleunigungssensoren ermittelten Daten zu falschen Signalen führen, die die Stabilität des Sattelanhängers sogar negativ beeinflussen können und so das Fahrverhalten der Zugmaschine nachteilig beeinträchtigen.

Die bisher zum Einsatz kommenden fahrdynamischen Regelungen, wie das ABS und ASR haben den Nachteil, dass sie aufgrund ihrer Sensorik mit einer indirekten Messung durch die Sensoren erst nach dem Erreichen einer Aktivierungsschwelle, d.h. nicht unmittelbar auf die Fahrzeugbewegung des Sattelanhängers reagieren können. Bei den bisher verwendeten Gierraten- und Querbeschleunigungssensoren muss die Massenträgheit nach Überwinden innerer Widerstände und Reibungskräfte innerhalb der Sensoren erst wirksam werden, bevor entsprechende Signale entstehen und weitergeleitet werden können. Das dynamische Fahrverhalten von Sattelanhängern, das wesentlich von der Verteilung von Ladung auf dem Sattelanhänger und von den Wechselwirkungen der Bodenbeschaffenheit mit der Reifencharakteristik abhängt, kann mit den bekannten Aktoren ABS, ASR und ESP in Kombination mit den bisherigen Gierraten- und Querbeschleunigungssensoren nicht ausreichend genau und zeitnah erfasst werden, da hierbei die Bewegungs- und die Beschleunigungsdaten im jeweiligen Schwerpunkt des Sattelanhängers nicht ermittelt werden können.

Die vorliegende Erfindung schafft es über die Messung des Knickwinkels zwischen Zugfahrzeug und Anhänger und mit der Messung des Beladezustandes des Anhängers die oben genannten Nachteile zu eliminieren. Indem kritische Fahrzustände früher erkannt werden und eine nahezu verzögerungsfreie Ansteuerung der Aktoren ABS, ASR und ESP auch bereits bei der Annäherung an kritische Fahrzustände möglich ist, kann die aktive Verkehrssicherheit aufgrund kürzerer Bremswege und kürzerer Reaktionszeiten wesentlich verbessert und Unfallfolgen gemindert werden.

Die Knickwinkelmesseinrichtung besteht aus einem oberhalb und/oder unterhalb eines Königszapfens in seinem Zentrum angebrachten Knickwinkelsensor der berührungsfrei oder nicht berührungsfrei ausgebildet sein kann. Mit dem Knickwinkelsensor werden Daten für den Knickwinkel erfasst. Diese werden einer Fahrzeugzustandserkennungseinheit zugeführt. Diese berechnet auf elektronischem Wege den Knickwinkel und aus der gemessenen Zeit die Knickwinkelgeschwindigkeit und die Knickwinkelbeschleunigung.

Die Lastverteilung auf der Anhängerseite wird durch mindestens zwei Lastmessern gemessen. Diese Lastmesser sind so angebracht, dass sie die für die Gesamtlast repräsentativen Lasten in mindestens zwei Punkten ermitteln. Die Messdaten dazu werden ebenfalls der Fahrzustandserkennungseinheit zugeführt. Mit den physikalischen Daten des Anhängers, welche der Fahrzeugzustandserkennungseinheit elektronisch zur Verfügung gestellt werden, kann die Lage des Schwerpunkts im Anhänger ermittelt werden. Ebenfalls wird in der Fahrzeugzustandserkennungseinheit der jeweilige Lenkwinkel erfasst.

Die in der Fahrzeugzustandserkennungseinheit berechneten Werte werden einer Auswerteinheit zugeführt, die aus den von der Fahrzeugzustandserkennungseinheit errechneten Werten elektrische Signale für die bestehenden Systeme, wie ABS, ASR und ESP generiert.

Ebenfalls werden die von der Fahrzeugzustandserkennungseinheit errechneten Werte einer Anzeigeeinheit zugeführt, in der alle Werte der Fahrzeugzustandserkennungseinheit dargestellt werden können. Als besonders nützlich hat sich hierbei die Darstellung des Knickwinkels und der Knickwinkelgeschwindigkeit in einem Vierquadrantenkoordinatensystem herausgestellt. Das Über- und/oder Unterschreiten von festgelegten kritischen Werten kann zusätzlich zur Anzeigeeinheit mit akustischen und/oder optischen Warnmeldungen angezeigt werden.

Durch dieses Verfahren können die Aktoren von ABS, ASR und ESP nahezu verzögerungsfrei und vorbeugend angesteuert werden. Bei der vorliegenden Erfindung entfallen somit die bisher eingesetzten Gierratensensoren sowie die Querbeschleunigungssensoren.

Weitere Merkmale und Vorteile der Erfindung ergeben sich aus den weiteren Ansprüchen der Beschreibung und den Zeichnungen. In den Zeichnungen ist die Erfindung als Schemazeichnung, Flussdiagramm und als Anzeige des Vierquadrantenkoordinatensystems dargestellt. Im Einzelnen zeigen:

Fig. 1 schematische Zeichnungen der Anordnung des Knickwinkelsensors und der Lastmesser im Zusammenhang der gemessenen und errechneten Werten,

Fig. 2 Flussdiagramm des Verfahrens,

Fig. 3 Anzeige im Vierquadrantenkoordinatensystem der Werte Knickwinkel und Knickwinkelgeschwindigkeit.

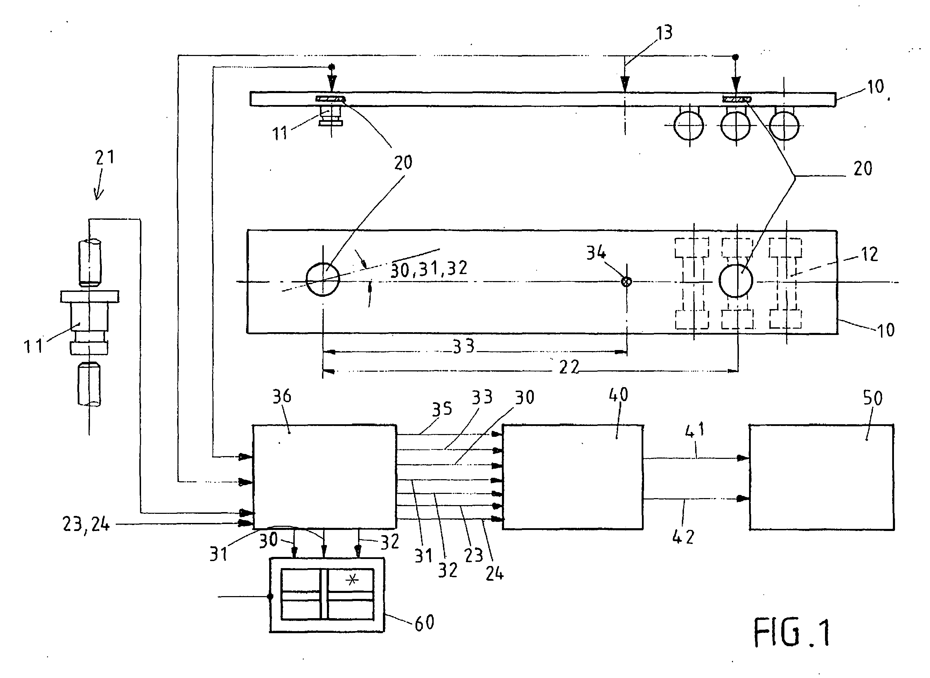

In Fig. 1 ist der prinzipielle Aufbau für das Verfahren gezeigt. Man sieht den Anhänger 10 mit den Hinterachsen 12 und dem Königszapfen 11. Für die Lastmessungen sind zwei Lastmesser 20 vorgesehen, die im vorliegenden Ausführungsbeispiel als Druckmessdosen ausgebildet sind. Am Königszapfen 11 ist mindestens ein Knickwinkelsensor 21 angebracht. Dieser kann zugfahrzeugseitig von unten gegenüber dem Königszapfen 11 eingebracht werden und/oder anhängerseitig von oben über den Königszapfen 11.

Der Knickwinkelsensor 21 misst den Winkel zwischen Zugfahrzeug und Anhänger und stellt den Knickwinkel 30 dar. Die Lastmesser 20 und die Sensoren 21 erzeugen messbare Signale, die der Fahrzeugzustandserkennungseinheit 36 zugeführt werden. Ebenso misst die Fahrzeugzustandserkennungseinheit die Zeit 23 und erhält vom Zugfahrzeug ein Signal der Momentangeschwindigkeit 24. Die Fahrzeugzustandserkennungseinheit 36 errechnet aus der momentanen Lastverteilung im Anhänger 10 und den physikalischen Abmessungen des Anhängers, insbesondere der Gesamtlänge 22 (lges) die Position 33 (11) des Schwerpunkts 34 im Anhänger 10. Hierzu wird folgende Gleichung benutzt:

$$l1 = P2 \times lges / (P1 + P2).$$

Hierbei stellen P 1 und P 2 die gemessenen Lasten und Lastmesser 20 dar. Ebenso ermittelt die Fahrzeugzustandserkennungseinheit 36 aufgrund der gemessenen Zeit 23 und dem Signal des Knickwinkelsensors 21 die Knickwinkelgeschwindigkeit 31.

Diese gemessenen und errechneten Werte werden von der Fahrzeugzustandserkennungseinheit 36 einer Anzeigeeinheit 60 zugeführt. Im vorliegenden Ausführungsbeispiel werden der Anzeigeeinheit 60 der Knickwinkel 30, die Knickwinkelgeschwindigkeit 31 und die Knickwinkelbeschleunigung 32 zugeführt. In der Anzeigeeinheit 60 werden diese Werte optisch dargestellt, vorzugsweise im einem Vierquadrantenkoordinatensystem.

Weiterhin werden die gemessenen und errechneten Werte der Fahrzeugszustandserkennungseinheit 36 sowie der Lenkwinkel 24 einer Auswerteinheit 40 zugeführt. Diese Auswerteinheit vergleicht die gemessenen und errechneten Werte mit vorgegebenen kritischen Grenzen und erzeugt Steuersignale zum Ansteuern entsprechender Faktoren des ESP-Systems, nämlich der Querbeschleunigung 42 und der Gierrate 41.

Durch die Berechnung der Steuersignale für das ESP-System werden kritische Fahrzustände schon bei Annäherung an die Stabilitätsgrenzen und ohne Zeitverzögerung erkannt. Dadurch entfallen auch die herkömmlichen Gierraten- und die Beschleunigungssensoren.

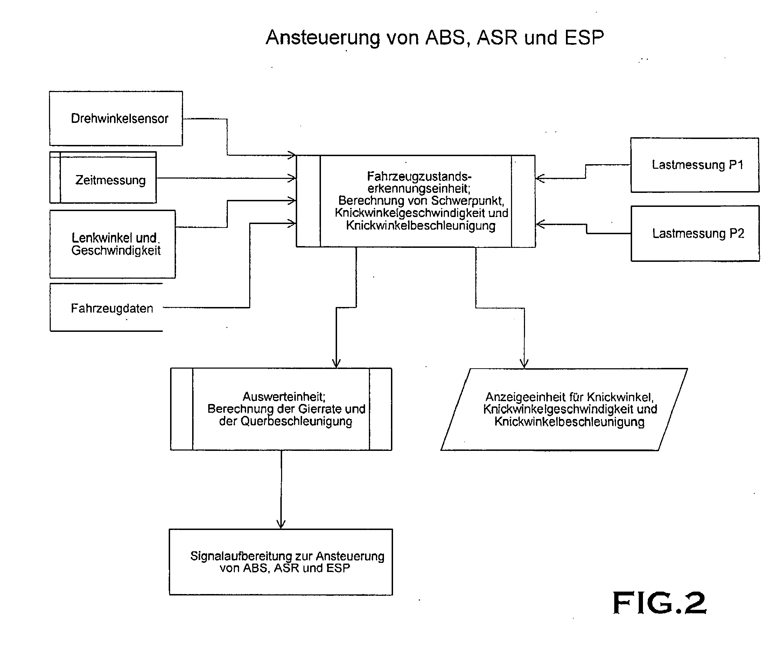

In Fig. 2 ist das Verfahren anhand eines Flussdiagramms erklärt. Hierbei ist zentral die Fahrzeugzustandserkennungseinheit 36 zu sehen, die mit den Werten des Knickwinkelsensors 21, einer Zeitmessung 23, dem Lenkwinkel des Zugfahrzeugs 24 und mit den physikalischen Fahrzeugdaten versorgt wird. Ebenfalls werden der Fahrzeugzustandserkennungseinheit 36 die momentanen Lastmessungen der Lastmesser 20 zugeführt. Die gemessenen Werte sowie die von der Fahrzeugzustandserkennungseinheit 36 errechneten Werte werden einer Auswerteinheit 40 sowie einer Anzeigeeinheit 60 zur Verfügung gestellt. Während die Anzeigeeinheit 60 für die optische Darstellung der gemessenen und errechneten Werte der Fahrzeugzustandserkennungseinheit 36 zuständig ist, wertet die Auswerteinheit diese aus und erzeugt somit Steuersignale für die Aktoren 50 des vorhandenen ESP-Systems.

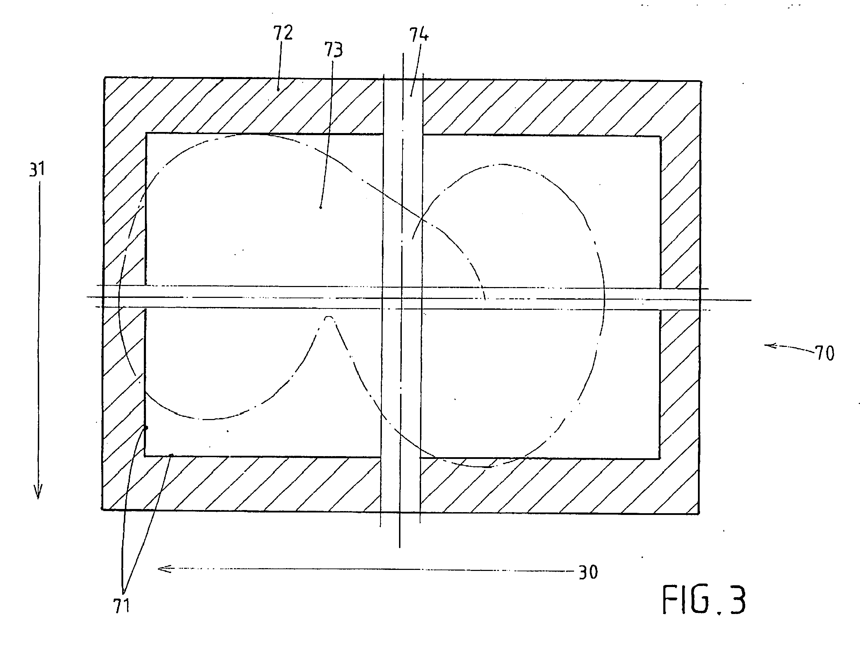

In Fig. 3 ist eine Ausgabe der Anzeigeeinheit 60 im Vierquadrantenkoordinatensystem zu sehen. Das Koordinatensystem selber ist in drei Bereiche unterteilt, nämlich den funktionsfreien Bereich 74, der um die Mittellinie herum im Bereich der beiden Achsen zu erkennen ist. In diesem Bereich werden keine Steuersignale für das ESP-Signal erzeugt und/oder benötigt.

Als Rand um das Koordinatensystem, welcher hier schraffiert dargestellt ist, ist der vordefinierte kritische Bereich 72. Sollten die momentanen Werte des Fahrzustandes in diesen Bereich fallen, ist ein kritischer Fahrzustand erreicht und die Aktoren 50 des ESP-System müssen entsprechend stark reagieren. Zusätzlich kann in dem kritischen Bereich 72 akustische und/oder optische zusätzliche Signale zu der Anzeigeeinheit 60 hilfreich sein.

Zwischen dem kritischen Bereich 72 und dem funktionsfreien Bereich 74 ist der unkritische Bereich 73. Dieser deckt die meisten normalen Fahrzustände ab, indem zwar Gierraten- 41 und Querbeschleunigungswerte 42 im Anhänger gemessen werden können, diese jedoch als nicht kritisch für das Fahrzeug betrachtet werden. Die Aktoren 50 für das ESP-System sind hier aktiv und werden zur Stabilisierung des dynamischen Fahrzeugzustands entsprechend angesteuert. Es kann festgelegt werden, dass bei Annäherung des momentanen Fahrzustandes vom unkritischen an den kritischen Bereich ebenfalls schon entsprechend die Aktoren 50 oder zusätzliche akustische und/oder optische Signale abgesetzt werden können.

Durch die Möglichkeit auch Annäherungen an kritische Bereiche und nicht erst kritische Bereiche selber detektieren zu können, wird ein großes Maß an Sicherheit für das Fahrzeug bereitgestellt.

Die vorliegende Erfindung ist nicht auf das vorliegende Ausführungsbeispiel begrenzt, vielmehr sind weitere Ausführungsbeispiele denkbar. So kann die Position und Anzahl der Lastmesser 20 variieren. Ebenso könnten zusätzliche Fahrzeugwerte mit an die Fahrzeugzustandserkennungseinheit 36 angebunden werden, um der genaueren Berechnung des momentanen und des zukünftigen Fahrzeugzustandes dienlich zu sein.

**Bezugszeichenliste:**

| | |
|---|---|
| 10 | Anhänger |
| 11 | Königszapfen |
| 12 | Hinterachsen |
| 20 | Lastmesser |
| 21 | Knickwinkelsensor |
| 22 | Gesamtlänge |
| 23 | Lenkwinkel |
| 24 | Geschwindigkeit |
| 30 | Knickwinkel |
| 31 | Knickwinkelgeschwindigkeit |
| 32 | Knickwinkelbeschleunigung |
| 33 | Lage des Schwerpunkts |
| 34 | Schwerpunkt |
| 35 | Gesamtlast |
| 36 | Fahrzustandserkennungseinheit |
| 40 | Auswerteinheit |
| 41 | Gierrate |
| 42 | Querbeschleunigung |
| 50 | Aktoren |
| 60 | Anzeigeeinheit |
| 70 | Vierquadrantenkoordinatensystem |
| 71 | Stabilitätsgrenzen |
| 72 | kritischer Bereich |
| 73 | unkritischer Bereich |
| 74 | funktionsfreier Bereich |

**Patentansprüche**

1. Verfahren zur Ansteuerung des elektronischen Stabilitätsprogramms (ESP) von Fahrzeuganhängern, mit mindestens einem Knickwinkelsensor, mit mindestens zwei Lastmessern, wobei der Knickwinkelsensor (21) den momentanen Knickwinkel (30) von Zugfahrzeug und Anhänger (10) misst und einer Fahrzeugzustandserkennungseinheit (36) zuführt und

der Knickwinkelsensor (21) zentral zugmaschinenseitig unter und/oder anhängerseitig oberhalb eines Königszapfens (11) angebracht ist,

**dadurch gekennzeichnet,**

**dass** die momentanen Lasten der Lastmesser (20), welche die Lastverteilung in Längsrichtung anhängerseitig messen, der Fahrzeugzustandserkennungseinheit (36) zugeführt werden

und **dass** die Fahrzeugzustandserkennungseinheit (36) aus den physikalischen Fahrzeugdaten und den momentanen Lasten die momentane Gesamtlast (35) und den momentanen Schwerpunkt (33) sowie die Position des Schwerpunkte in Längsrichtung des Anhängers (10) berechnet.

2. Verfahren nach Anspruch 1, **dadurch gekennzeichnet, dass** die momentanen Fahrzeugdaten, insbesondere Lenkwinkel (23) und Geschwindigkeit (24) des Zugfahrzeugs erfasst und der Fahrzeugzustandserkennungseinheit (36) zugeführt wird.

3. Verfahren nach einem der Ansprüche 1 oder 2, **dadurch gekennzeichnet, dass** die physikalischen Fahrzeugdaten aus einem elektronischen Speicher der Fahrzeugzustandserkennungseinheit (36) zur Verfügung stehen.

4. Verfahren nach einem der Ansprüche 1 bis 3, **dadurch gekennzeichnet, dass** die Fahrzeugzustandserkennungseinheit (36) mit Hilfe einer Zeitmessung die Knickwinkelgeschwindigkeit (31) und die Knickwinkelbeschleunigung (32) errechnet.

5. Verfahren nach einem der Ansprüche 1 bis 4, **dadurch gekennzeichnet, dass** eine Auswerteinheit (40) mittels der errechneten Werte entsprechende Signale (41,42) zur Ansteuerung für die Aktoren (50) des ABS, ASR und/oder ESP bereitstellt.

6. Verfahren nach einem der Ansprüche 1 bis 5, **dadurch gekennzeichnet, dass** eine Anzeigeeinheit (60) der Fahrzeugzustandserkennungseinheit (36) nachgeschaltet ist, welche die gemessenen und/oder errechneten Fahrzeugzustände (23,24,30,31,32,33,34,35) darstellt

7. Verfahren nach einem der Ansprüche 1 bis 6, **dadurch gekennzeichnet, dass** in der Auswerteinheit (40) die errechneten und gemessenen Fahrzeugzustände (23,24,30,31,32,33,35) mit vordefinierten Grenzwerten vergleichen werden und beim Überschreiten der Grenzwerte die Aktoren (50) entsprechend der Fahrsituation angesteuert werden.

8. Verfahren nach einem der Ansprüche 1 bis 7, **dadurch gekennzeichnet, dass** die Anzeigeeinheit (60) die anzeigbaren Werte (23,24,30,31,32,33,34,35) in einem 4-Quadrantenkennfeld (70) darstellt.

9. Verfahren nach Anspruch 8, **dadurch gekennzeichnet, dass** das 4-Quadrantenfeld (70) in einen funktionsfreien (71), einen unkritischen (73) und einen kritischen Bereich (72) unterteilt ist.

10. Verfahren nach einem der Ansprüche 9, **dadurch gekennzeichnet, dass** zusammen mit der visualisierten Darstellung der Anzeigeeinheit (60) bei Annäherung an die Grenze zum kritischen Bereich (72) akustische und/oder optische Warnungen für den Fahrer erfolgen.

11. Verfahren nach einem der Ansprüche 1 bis 10, **dadurch gekennzeichnet, dass** der Gierratensensor und der Querbeschleunigungssensor üblicher Bauart entfallen.

12. Verfahren nach einem der Ansprüche 1 bis 7, **dadurch gekennzeichnet, dass** die Lastmesser (20) Druckmessdosen sind.

FIG.1

## Ansteuerung von ABS, ASR und ESP

FIG.2

EP 2 174 847 A1

FIG.3

EP 2 174 847 A1

**Europäisches Patentamt**
**European Patent Office**
**Office européen des brevets**

## EUROPÄISCHER RECHERCHENBERICHT

Nummer der Anmeldung

EP 09 01 2198

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | EP 0 943 514 A1 (DAIMLER CHRYSLER AG [DE]) 22. September 1999 (1999-09-22)<br>* Absatz [0081] - Absatz [0084] *<br>* Absatz [0101] - Absatz [0122]; Abbildungen 1,2 *<br>----- | 1-3,5,7, 11-12<br><br>4,6,8,10 | INV.<br>B60T8/1755<br>B60T8/17<br>B60T8/172 |
| X | DE 198 59 966 A1 (BOSCH GMBH ROBERT [DE]) 13. Juli 2000 (2000-07-13)<br>* Spalte 4, Zeile 39 - Spalte 8, Zeile 56; Abbildungen 1,2 *<br>----- | 1-3,5,7, 11 | |
| Y | EP 0 433 921 A2 (EATON CORP [US]) 26. Juni 1991 (1991-06-26)<br>* Spalte 6, Zeile 17 - Spalte 8, Zeile 19 *<br>* Spalte 9, Zeile 42 - Spalte 10, Zeile 38 *<br>----- | 4 | |
| Y | GB 2 356 612 A (GOODCHILD IVAN [GB]) 30. Mai 2001 (2001-05-30)<br>* Abbildung 11 *<br>----- | 6,8 | **RECHERCHIERTE SACHGEBIETE (IPC)** |
| Y | US 5 825 284 A (DUNWOODY ANDREW B [CA] ET AL) 20. Oktober 1998 (1998-10-20)<br>* Spalte 3, Zeile 56 - Spalte 5, Zeile 24; Abbildungen 2A-2C *<br>----- | 6,10 | B60T |
| Y | DE 10 2006 047456 A1 (STAUDE & COMPANY [DE]) 10. April 2008 (2008-04-10)<br>* Absatz [0021] - Absatz [0022] *<br>----- | 6 | |
| A | DE 199 64 164 A1 (BOSCH GMBH ROBERT [DE] KNORR BREMSE SYSTEME [DE]) 5. Juli 2001 (2001-07-05)<br>* Zusammenfassung *<br>----- | 1-12 | |

Der vorliegende Recherchenbericht wurde für alle Patentansprüche erstellt

| Recherchenort | Abschlußdatum der Recherche | Prüfer |
|---|---|---|
| München | 3. März 2010 | Marx, Winfried |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 2198

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2010

| Im Recherchenbericht angeführtes Patentdokument | | Datum der Veröffentlichung | Mitglied(er) der Patentfamilie | | Datum der Veröffentlichung |
|---|---|---|---|---|---|
| EP 0943514 | A1 | 22-09-1999 | DE | 19812237 C1 | 23-09-1999 |
| | | | ES | 2242316 T3 | 01-11-2005 |
| | | | JP | 3044659 B2 | 22-05-2000 |
| | | | JP | 2000006830 A | 11-01-2000 |
| | | | US | 6223114 B1 | 24-04-2001 |
| DE 19859966 | A1 | 13-07-2000 | WO | 0038965 A1 | 06-07-2000 |
| | | | DE | 59912621 D1 | 10-11-2005 |
| | | | EP | 1056630 A1 | 06-12-2000 |
| | | | JP | 2002533262 T | 08-10-2002 |
| | | | US | 6604035 B1 | 05-08-2003 |
| EP 0433921 | A2 | 26-06-1991 | AU | 629776 B2 | 08-10-1992 |
| | | | AU | 6821790 A | 27-06-1991 |
| | | | BR | 9006647 A | 01-10-1991 |
| | | | CA | 2032309 A1 | 21-06-1991 |
| | | | DE | 69019932 D1 | 13-07-1995 |
| | | | JP | 4143179 A | 18-05-1992 |
| | | | US | 5022714 A | 11-06-1991 |
| GB 2356612 | A | 30-05-2001 | KEINE | | |
| US 5825284 | A | 20-10-1998 | AT | 206368 T | 15-10-2001 |
| | | | CA | 2273950 A1 | 18-06-1998 |
| | | | CN | 1239919 A | 29-12-1999 |
| | | | DE | 69707148 D1 | 08-11-2001 |
| | | | DE | 69707148 T2 | 07-03-2002 |
| | | | EP | 0942839 A1 | 22-09-1999 |
| | | | JP | 2001507648 T | 12-06-2001 |
| | | | KR | 20000057486 A | 15-09-2000 |
| | | | WO | 9825779 A1 | 18-06-1998 |
| DE 102006047456 | A1 | 10-04-2008 | EP | 2069188 A1 | 17-06-2009 |
| | | | WO | 2008040413 A1 | 10-04-2008 |
| | | | US | 2010025963 A1 | 04-02-2010 |
| DE 19964164 | A1 | 05-07-2001 | FR | 2803259 A1 | 06-07-2001 |
| | | | JP | 2001219832 A | 14-08-2001 |
| | | | SE | 522699 C2 | 02-03-2004 |
| | | | SE | 0004877 A | 01-07-2001 |
| | | | US | 2001018630 A1 | 30-08-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006052698
- WO 030005538 A
- DE 19918597